# EUROPEAN PATENT SPECIFICATION

(11) **EP 2 069 254 B1**
(45) Date of publication and mention of the grant of the patent: **13.12.2017**
(21) Application number: 07866681.5
(22) Date of filing: 08.08.2007
(51) Int. Cl.: C04B 7/21, C04B 24/12, C04B 11/28

(54) **A METHOD OF INERTISING THE IMPURITIES IN PHOSPHOGYPSUM**
VERFAHREN ZUR INERTISIERUNG DER UNREINHEITEN IN PHOSPHORGIPS
PROCÉDÉ DESTINÉ À RENDRE INERTE LES IMPURETÉS DANS LE PHOSPHOGYPSE

(30) Priority: 25.08.2006 IN MU13422006
(43) Date of publication of application: 17.06.2009
(73) Proprietor: ACC Limited, Mumbai 400 020, Maharashtra (IN)
(72) Inventor: KHADILKAR, Shreesh Anant, Thane 400 604, Maharashtra (IN); KARANDIKAR, Manish Vasant, Thane 400 604, Maharashtra (IN); ANIKODE, Padmanabhan Ramalingam, Thane 400 604, Maharashtra (IN); LELE, Pradip Gopal, Thane 400 604, Maharashtra (IN); VAITY, Rina Suresh, Thane 400 604, Maharashtra (IN); PATHAK, Abhay Kant, Thane 400 604, Maharashtra (IN)
(74) Representative: Desaix, Anne
(86) International application number: PCT/IN2007/000342
(87) International publication number: WO 2008/062430

(56) References cited:
- WO-A-99/41065
- GB-A- 1 443 747
- US-A- 6 001 491

## Description

### Field of Invention:

The invention relates to a method of inertising soluble impurities of phosphates and fluorides and / or fluoride ions, in phosphogypsum, to make it a suitable substitute for gypsum in commercial and industrial applications, by pre-treatment or in-process treatment of the phosphogypsum.

### BACKGROUND OF INVENTION:

Gypsum, which is essentially CaSO₄.2H₂O, is an important and essential component of cement and constitutes 4-5 % of cement. It is added to regulate the extreme setting reaction of cement, which occur in the presence of water. The scarce availability together with the cost of mineral gypsum, has made it necessary to seek and use the less expensive alternatives such as phosphogypsum. This is particularly important in the cement industry, where margins are low, cost of materials is very crucial. Phosphogypsum is a cheap byproduct from the phosphoric acid industry. It's cost is about half to one third of the cost of gypsum. Phosphogypsum is essentially CaSO₄. 2H₂O. It is unsuitable for the manufacture of cement and several other commercial and industrial applications because of the presence of soluble impurities like Phosphates and Fluorides and other organic matter which may be present. These impurities when it exceeds minimal levels, severely restrict the use of phosphogypsum in commercial and industrial application especially in the manufacture of cement, since it retards the setting of cement when exposed to water, through the body of the cement. The soluble Phosphates reacts with calcium ions in the cement clinker and form insoluble calcium phosphate, which deposits on the surface of the hydrating grains of cement, thus hindering the penetration of water through the body of the cement grain and its reaction with water.

Similarly the Fluorides present in phosphogypsum precipitate as calcium fluoride in the lime rich region of the hydrating cement grains, preventing the setting of cement in the presence of water.

Several methods have been used to reduce the impurities in phosphogypsum and to make it equivalent to marine or mineral gypsum. The most popular process is by washing and leaching. Washing and leaching processes are cumbersome, since it involves handling of the slurry, and washing and drying the filtered cake. Another known method of treating phosphogypsum is with milk of lime [Ca(OH)₂], which converts the soluble impurities into insoluble calcium phosphate and calcium fluorides.

In patent Application number 1335/MUM/2003, the applicants have described a process of inertisation of the impurities in Phophogypsum by Thermochemical processing route, wherein a homogenous mixture of Phosphogypsum and reactive mineral elements capable of forming insoluble phosphates and volatile fluorides are prepared on a wet /dry basis, in the ratio of 1:100 to 50:100 by weight. The mixture is pyroprocessed in a furnace at a temperature of 150°C to 800°C for a period of 5-10 seconds to 50-60 mins., depending upon the type of pyro-processing technique used, to form processed phosphogypsum ⁽¹⁾. The Reactive mineral elements such as, aluminum, Manganese, Magnesium, Silica, Strontium, iron and barium were used. Reactive minerals such as alum, Aluminium Sulphates, Gibbisite, α-allumina, High Alumina Cements, Aluminosilicate glasses, Bauxite, and alumina bearing clays were preferred. However, this is an energy intensive process.

Patent no;GB 1443747 describes a method of purification of phosphogypsum where in the phosphogypsum grains are washed with water under pressure and the free phosphoric acid and fluorine impurities are removed, thereby reducing the consumption of reagents. The Gypsum so obtained has less than .01%, .09% and .01% by weight of impurities of phosphorus, fluorine and carbon respectively. An alkylaryl sulphonate is used as wetting agent to facilitate separation of phosphogypsum grains from water. However this process which is a method of leaching requires large volumes water for washing, and levels of soluble fluorine and phosphate contaminants present in the gypsum crystal lattice remains unchanged This method is particularly unsuitable for the cement industry, since the soluble phosphates and fluorides present within. the crystal lattice of gypsum), interferes with the setting process of Cement.

The present invention describes the use of chemicals namely alkyl, alkenyl and alkanol substituted derivatives of ammonia, including those occurring as industrial waste, to inertise the impurities in phosphogypsum and to make it a suitable substitute of gypsum.

Technical grade Alkanol substituted derivatives of ammonia have been used in percentages ranging from 0.02% to 0.04% of 95 - 98% purity, along with Gypsum in cement manufacture, in order to reduce energy consumption while attaining desired grain size of cement grains. The addition of higher percentage weight of these substituted derivatives of ammonia is not cost effective, since the energy benefit obtained does not offset the high cost of technical grade compounds. The invention describes for the first time the use of alkyl, alkenyl and alkanol substituted derivatives of ammonia including those occurring as industrial wastes, to treat phosphogypsum to make it suitable substitute for gypsum in many industrial and commercial applications especially cement manufacture.

The use of treated phosphogypsum is of particular relevance in Cement Industry. Chemically treated Phophogypsum, whether pretreated with the chemical additives or treated during the process of production with these chemical additives during the Cement manufacture by intergrinding / interblending process, the performance of phosphogypsum in multigrade cement, is made equivalent or even better than with use of mineral and marine especially in terms of setting characteristics and compressive strength developments of the Cements in cement sand Mortars and Concrete.

### SUMMARY:

In its main aspect, the invention relates to a method of inertising free soluble impurities of phosphates and / or fluorides ions, in phosphogypsum, to make it a suitable substitute for natural gypsums in commercial and industrial applications. The phosphogypsum is pre-treated individually or treated along with standard constituents for the industrial applications, with alkyl, alkenyl, and alkanol substituted ammonia derivatives, either individually or in combination with one another to form stable intermediary phosphates and / or fluoride salts of alkyl, alkenyl and / or alkanol substituted derivatives of ammonia.

In accordance with this invention the alkyl, alkenyl and alkanol substituted derivatives of ammonia are added in the proportion of 0.08% to 5% by weight of phosphogypsum. The molar weight of the alkyl, alkenyl and /or alkanol substituted derivatives of ammonia are one among C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃.

In a more important aspect of the invention, industrial wastes containing the alkyl, alkenyl and alkanol substituted derivatives of ammonia is used.

In a further aspect of this invention, the industrial application for which treated phosphogypsum is to be used in manufacture of multigrade cement, which includes Ordinary Portland Cement, Portland Pozzolana Cement and Portland Slag Cement. The in - process treatment of phosphogypsum consists of addition of alkyl, alkenyl and alkanol substituted derivatives of ammonia while intergrinding / interblending phosphogypsum with standard constituents, during the Cement manufacture, to form the stable intermediary phosphates and fluoride salts of the alkyl, alkenyl and alkanol substituted derivatives of ammonia. The standard constituents, for cement manufacture are among the group of clinker minerals and supplementary cementitious materials like slag, fly ash, limestone, metakaolin etc.

In the final aspect of this invention, the cement manufactured using phophogypsum treated by the process revealed in this invention has compressive strengths of 15 to 75 MPa at hydration ages of 1 to 28 days. Simultaneously the cement so manufactured also has an initial setting time of 70 to 150 minutes and a final setting time of 150 to 250 minutes.

### DESCRIPTION

A brief description of the invention is as follows:
The following is a brief description of working of this invention.
The invention relates to methods of inertising the soluble impurities of phosphates and/ or fluorides ions in phosphogypsum. Phospho-gypsum which is a byproduct of the phosphoric acid industry, can be used as an inexpensive raw material in place of marine or mineral gypsum, in industry, especially in cement manufacture. The phosphate and fluorides impurities are inertised either by the pretreatment of phosphogypsum with chemical additives namely alkyl, alkenyl and alkanolused singularly or by taking a mixture of these substituted derivatives of ammonia before it is used in industrial applications, including Cement Manufacture The afore referred chemical additives are sprayed over the phosphogypsum and allowed to condition over an extended period of time. In the alternative the phosphogypsum is inertised during the process of manufacture, in the interblending or intergrinding of cement and cementitious materials, according to the method of claim 7. The afore mentioned chemical additives may be used individually or in combination with one another. The substituted derivatives of ammonia react with the phosphate ions in phosphogypsum to form a stable ionic phosphate salt. Similarly they react with the fluoride impurities in phosphogypsum to form stable ionic fluorides salt. Thus the soluble impurities of phosphogypsum, which form undesirable phosphates and fluorides of calcium on the hydrating grains in the industrial application are inertised, and do not interfere in the setting process.

In accordance with this invention the alkyl, alkenyl and alkanol substituted derivatives of ammonia either individually or in combination are added in the proportion of 0.08% to 5% by weight of phosphogypsum. The proportion of the additive to be used would depend on the relative purity of the phosphogypsum and that of the chemical additive. When the additives used are in the form of industrial wastes, the proportion of the additives would depend on the concentration of these derivatives of ammonia in the wastes. The alkyl, alkenyl and / or alkanol substituted derivatives of ammonia used are all covered under the following molecular formula: C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃.

The alkyl, alkenyl and / or alkanol substituted derivatives of ammonia used may be among one or more substituted amines containing primary, secondary and tertiary amines and mixture there of and include Monoethanolamine (C₂H₇NO), Di-ethanolamine (C₄H₁₁NO₂), Tri-ethanolamine (C₆H₁₅NO₃) ethylenediamine (C₂H₈N₂), diethylene -tri amine (C₄H₁₃N₃), tri-ethylene terta - amine (C₆H₁₈N₄), tetra-ethylene penta-amine (C₈H₂₃N₅), N,N-diethyl-ethanolamine (C₆H₁₅NO), N,N-dimethylethanolamine (C₄H₁₁NO), N-methyl di-ethanolamine [C₅H₁₃NO₂], N-methylethanolamine [C₃H₉NO], tri - isopropyl amine (C₉H₂₁NO₃).

The formation of these stable salts is of particular relevance in the cement industry. Unlike the water soluble phosphates and fluorides, these stable ionic substituted ammonium phosphate salts and the substituted ammonium fluoride salts, do not interfere with the cement hydration reactions at early stages of cement setting.

The reaction of water soluble phosphates (i.e. free phosphoric acid) and fluorides (i.e. free hydrofluoric acid) in phosphogypsum and primary, secondary and tertiary alkyl, alkenyl and alkanol derivatives and their mixtures there of during hydration process is exemplified below by a typical example. The reaction produces an alkyl, alkenyl alkanol substituted ammonium salts of the acids viz: phosphoric acids and hydrofluoric acid.

R₃N + H₃PO₄ → (R₃NH)⁺H₂PO₄⁻

Substituted Phosphoric acid alkyl, alkenyl/alkanol ammonium derivatives of Ammonia hydrogen phosphate salt

R₃N + HF → (R₃NH)⁺F⁻

Substituted Hydrofluoric acid alkyl, alkenyl/alkanol ammonium fluoride Derivatives of salt Ammonia

Wherein R is a Alkyl or Alkenyl or Alkanol or substituted derivatives of ammonia

These salts formed in the presence of water, further undergo reaction with calcium hydroxide released during the hydration process [2C₃S +6H → C₃S₂H₃ +3Ca(OH)₂] and forms insoluble calcium phosphate and calcium fluoride which does not take part in the hydration reaction and in turn does not affect the setting time of cement as shown below. The alkyl, alkenyl and/or alkanol substituted ammonium salts form the corresponding hydroxide salt.

2 (R₃NH) ⁺ H₂PO₄⁻ + 3Ca(OH)₂ → Ca₃(PO₄)₂ + 2(R₃NH)⁺ OH)⁻ + 2H₂O

alkyl, alkenyl/alkanol Calcium hydroxide Calcium phosphate Hydroxide salt ammonium hydrogen → phosphate

2(R₃NH)⁺F⁻ + Ca(OH)₂ CaF₂ + 2(R₃NH)⁺(OH)⁻

alkyl, alkenyl/alkanol Calcium hydroxide Calcium fluoride Hydroxide salt ammonium fluoride

The characteristics of cement depend on the setting time and the relative compressive strength. Chemically pretreated or in-process treated phosphogypsum by the method disclosed herein, significantly enhances compressive strength and reduces initial and final setting time.

The following examples gives the comparative values of setting time as well as compressive strengths of OPC, PPC, PSC with chemically treated phosphogypsum.
The Example 1,2,3 gives the comparative levels of soluble and insoluble phosphates and fluoride impurities in phosphogypsum and the chemically treated phosphogypsum of different sources with different levels of impurities with use of alkyl, alkenyl, alkanol substituted derivatives of ammonia. The phosphogypsum from different sources at different levels of the fluoride and phosphate impurities, designated as Phosphogypsum - A, B, C.

While the subsequent Examples 4,5,6 illustrates the comparative properties of the Cements viz: Ordinary Portland Cement (OPC), Portland Pozzolana Cement (PPC) and Portland Slag Cement (PSC) produced with & without the chemically treated Phophogypsum.

### EXAMPLE-1: Characteristics of Chemically treated phosphogypsum - A (with <0.8% phosphate and fluoride impurities)

| **Raw material** | **% by weight** | **Initial content** | | | | **After Treatment** | | | |
|---|---|---|---|---|---|---|---|---|---|
| | | **Total** | | **Water soluble** | | **Total** | | **Water soluble** | |
| | | **P₂O₅** | **F** | **P₂O₅** | **F** | **P₂O₅** | **F** | **P₂O₅** | **F** |
| **Phospho Gypsum -A** | **95**-**99**.**95%** | 0.50 | 0.29 | **0**.**16** | **0**.**13** | 0.50 | 0.29 | **0**.**07** | **0**.**07** |
| **Alkyl,alkenyl ,alkanol substituted ammonia** | **0**.**08**-**5**.**0%** | | | | | | | | |

### EXAMPLE - 2: Characteristics of Chemically treated phosphogypsum - B (with 0.8 - 1.3 % phosphate and fluoride impurities)

| **Raw material** | **% by weight** | **Initial content** | | | | **After Treatment** | | | |
|---|---|---|---|---|---|---|---|---|---|
| | | **Total** | | **Water soluble** | | **Total** | | **Water soluble** | |
| | | **P₂O₅** | **F** | **P₂O₅** | F | **P₂O₅** | **F** | **P₂O₅** | **F** |
| **Phospho Gypsum -B** | **95**-**99**.**95%** | 0.81 | 0.24 | **0**.**24** | **0**.**13** | 0.81 | 0.24 | **0**.**08** | **0**.**08** |
| **Alkyl,alkenyl ,alkanol substituted ammonia** | **0**.**08**-**5**.**0%** | | | | | | | | |

### EXAMPLE-3: Characteristics of Chemically treated phosphogypsum - C (with >1.3% phosphate and fluoride impurities)

| **Raw material** | **% by weight** | **Initial content** | | | | **After Treatment** | | | |
|---|---|---|---|---|---|---|---|---|---|
| | | **Total** | | **Water soluble** | | **Total** | | **Water soluble** | |
| | | **P₂O₅** | **F** | **P₂O₅** | **F** | **P₂O₅** | **F** | **P₂O₅** | **F** |
| **Phospho Gypsum-C** | **95**-**99**.**95%** | 0.72 | 1.47 | **0.30** | **0.24** | 0.72 | 1.47 | **0**.**09** | **0**.**10** |
| **Alkyl, alkenyl, alkanol substituted ammonia** | **0**.**08**-**5**.**0%** | | | | | | | | |

### Example - 4 : Improvement in setting time and strength of OPC with use of Chemically Treated Phosphogypsum

| | **OPC With Phosphogypsum** | **OPC With Chemically Treated Phosphogypsum** |
|---|---|---|
| **Setting Time (Mins.)** | | |
| **Initial** | 350 | 70 - 150 |
| **Final** | >420 | 160 - 240 |

| **Compressive Strength (MPa)** | | |
|---|---|---|
| **1 Day** | 15.5 | 17-20 |
| **3 Days** | 48.7 | 50-53 |
| **7 Days** | 59.0 | 58-61 |
| **28 days** | 69.3 | 72-74 |

### Example - 5: Improvement in setting time and strength of PPC with use of Chemically Treated Phophogypsum

| | **PPC with Phosphogypsum** | **PPC with Chemically Treated Phosphogypsum** |
|---|---|---|
| | **Setting Time (Mins.)** | |
| **Initial** | 340 | 70-170 |
| **Final** | >420 | 140-250 |

| | **Compressive Strength (MPa)** | |
|---|---|---|
| **1 Day** | 11.8 | 12-15 |
| **3 Days** | 40.1 | 40 - 42 |
| **7 Days** | 51.4 | 51-53 |
| **28 days** | 64.3 | 63-65 |

### Example - 6 : Improvement in setting time and strength of PSC with use of Chemically Treated Phophogypsum

| | **PSC with Phosphogypsum** | **PSC with Chemically Treated Phosphogypsum** |
|---|---|---|
| **Setting Time (Mins.)** | | |
| **Initial** | 250 | 70 - 140 |
| **Final** | >340 | 180 - 250 |

| **Compressive Strength (MPa)** | | |
|---|---|---|
| **1 Day** | 7.7 | 7 - 9 |
| **3 Days** | 25.6 | 23-26 |
| **7 Days** | 40.9 | 39-42 |
| **28 days** | 56.1 | 53 - 57 |

Soluble phosphates and fluoride impurities in the treated phosphogypsum are at the level of < 0.10%, at which levels the impurities do not interfere in the hydration process. The treated phosphogypsum (Example - 1,2 & 3) is a lower cost substitute for gypsum in any industrial or commercial manufacture of OPC, PPC and PSC. It finds specific use in the cement industry, where normally gypsum is added to cement clinker to regulate the setting reaction of cement in the presence of water.

The Examples 7, 8, 9 exemplify the Cement quality produced in another embodiment of the invention where these alkyl, alkenyl alkanol substituted derivatives of ammonia were used in the inter ground / interblended OPC, PPC and PSC made with Phosphogypsum C.

| | Example 7 | | **Example 8** | | **Example 9** | |
|---|---|---|---|---|---|---|
| | **OPC With PG-C** | **OPC with PG-C + 0.08 - 5.0 C₈H₂₃N₅+ C₅H₁₃NO₂** | **PPC With PG-C** | **PPC with PG-C + 0.08-5.0 C₄B₁₀NO₂ +** | **PSC with PG-C** | **PSC with PG-C + 0.08 - 5.0 % C₃H₉NO + C₉H₁₅NO₃** |
| **Setting Time (Minutes)** | | | | | | |
| **Initial** | 340 | 70-150 | 340 | 70-150 | 340 | 70-150 |
| **Final** | >420 | 150-250 | >420 | 150-250 | >420 | 150-250 |

| **Compressive strengths (MPa)** | | | | | | |
|---|---|---|---|---|---|---|
| **1 Day** | 15.0 | 17-20 | 11.0 | 12-15 | 7.5 | 7-9 |
| 3 Days | 47.0 | 48-51 | 39.0 | 38- 41 | 25.0 | 24-26 |
| 7 Days | 58.0 | 58-61 | 48.0 | 47-50 | 40.0 | 39-41 |
| **28 days** | 67.0 | 68-70 | 60.0 | 59-61 | 55.0 | 54-56 |

The above examples illustrates the efficacy of the additive to substantially enhance the setting characteristics and compressive strengths of the different Cements manufactured with Phosphogypsum.

The setting of cement involves the reaction of clinker minerals with water to form a system of interlocking crystals, which lock the material together. The setting of cement is primarily due to the reaction of tri-calcium aluminate (Ca₃AlO₄), which is the most reactive of the clinker minerals present in cement.

The set regulating action of gypsum is primarily due to its reaction with tri-calcium aluminate. Calcium sulphate is soluble in water and aides in the setting process when it reacts with tri-calcium aluminate as given by the following reaction:

Ca₃AlO₄ + CaSO₄+H₂O → CaO.Al₂O₃.3CaSO_{4.}32H₂O (Ettringite).

The stable intermediary ionic salts formed by the derivatives of ammonia temporarily locks the soluble fluoride and phosphate ions, so that the initial setting reaction is complete.

The ettringite is usually formed as a very fine grained crystal, which forms a coating on the surface of tricalcium aluminate particles. These crystals are too small to bridge the gaps between the particles of cement. The cement mix therefore remains plastic. After the initial hydration reaction of cement, a dormant period occurs during which the rate of hydration of cement is usually reduced. During this dormant period, ettringite crystals continue to grow and eventually are large enough to impede the mobility of cement particles. At this stage setting occurs. The ettringite crystal formation is not impeded by the insoluble phosphates and fluorides of calcium which are subsequently formed.

Thus treated phosphogypsum without the free impurities of phosphates and fluorides is made a cost effective equivalent to mineral or marine gypsum, for use in industrial application.

## Claims

1. A method of inertising the free soluble impurities of phosphates and / or fluoride ions in phosphogypsum for use in industrial applications, by preconditioning of phosphogypsum over an extended period of time by spraying with alkyl, alkenyl and / or alkanol derivatives of ammonia, added in the proportion of 0.08% to 5% by weight of phosphogypsum, either individually or in combination with one another, to form stable intermediary phosphate and/or fluoride salts of the derivatives of ammonia.

2. A method as claimed in claim 1, wherein the alkyl, alkenyl and/or alkanol derivatives of ammonia are among C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃.

3. A method as claimed in claim 2, wherein industrial waste containing alkyl, alkenyl and / or alkanol derivatives of ammonia is used.

4. A method as claimed in claim 2 or 3, where the industrial application for which phosphogypsum is to be used is manufacture of multigrade cement, including Ordinary Portland Cement, Portland Pozzolana Cement and Portland Slag Cement.

5. A method as claimed in claim 4, wherein the cement manufactured has compressive strengths of 15 to 75 MPa at hydration ages of 1 to 28 days.

6. A method as claimed in claim 5, wherein the cement manufactured has an initial setting time of 70 to 150 minutes and a final setting time of 150 to 250 minutes.

7. A method of inertising the free soluble impurities of phosphates and / or fluoride ions in phosphogypsum for use in the manufacture of cement, by in-process treatment of phosphogypsum together with one or more standard constituents used in the manufacture of cement, by interblending or intergrinding with alkyl, alkenyl and / or alkanol derivatives of ammonia among C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃, added in the proportion of 0.08% to 5% by weight of phosphogypsum, either individually or in combination with one another, to form stable intermediary phosphate and/or fluoride salts of the derivatives of ammonia, wherein the standard constituents are among the group consisting of cement, clinker and cementitious mineral constituents such as fly ash, slag, limestone, metakaolin, silica fume, calcined clay and volcanic ash.

8. A method as claimed in claim 7, wherein industrial waste containing alkyl, alkenyl and / or alkanol derivatives of ammonia is used.

9. A method as claimed in claim 7 or 8, where the industrial application for which phosphogypsum is to be used is manufacture of multigrade cement among Ordinary Portland Cement, Portland Pozzolana Cement and Portland Slag Cement.

10. A method as claimed in claim 9, wherein the cement manufactured has compressive strengths of 15 to 75 MPa at hydration ages of 1 to 28 days.

11. A method as claimed in claim 10, wherein the cement manufactured has an initial setting time of 70 to 150 minutes and a final setting time of 150 to 250 minutes.

## Patentansprüche

1. Verfahren zum Inertisieren der freien löslichen Verunreinigungen von Phosphaten und/oder Fluoridionen in Phosphorgips zur Verwendung in industriellen Anwendungen, durch Vorbehandeln von Phosphorgips über einen längeren Zeitraum durch Besprühen mit Alkyl-, Alkenyl- und/oder Alkanolderivaten von Ammoniak, die in einem Anteil von 0,08 Gew.-% bis 5 Gew.-%, bezogen auf den Phosphorgips, entweder einzeln oder in Kombination miteinander zugegeben werden, so dass sich stabile Zwischenverbindungen von Phosphat- und/oder Fluoridsalzen mit den Ammoniakderivaten bilden.

2. Verfahren nach Anspruch 1, wobei die Alkyl-, Alkenyl- und/oder Alkanolderivate von Ammoniak unter C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃ gewählt sind.

3. Verfahren nach Anspruch 2, wobei Industrieabfälle, die Alkyl-, Alkenyl- und/oder Alkanolderivate von Ammoniak enthalten, verwendet werden.

4. Verfahren nach Anspruch 2 oder 3, wobei es sich bei der industriellen Anwendung, für die Phosphorgips zu verwenden ist, um die Herstellung von Multigrade-Zement, darunter gewöhnlicher Portland-Zement, Portland-Puzzolan-Zement und Portland-Schlacken-Zement, handelt.

5. Verfahren nach Anspruch 4, wobei der hergestellte Zement Druckfestigkeiten von 15 bis 75 MPa nach einer Hydratation von 1 bis 28 Tagen aufweist.

6. Verfahren nach Anspruch 5, wobei der hergestellte Zement eine anfängliche Abbindezeit von 70 bis 150 Minuten und eine endgültige Abbindezeit von 150 bis 250 Minuten aufweist.

7. Verfahren zum Inertisieren der freien löslichen Verunreinigungen von Phosphaten und/oder Fluoridionen in Phosphorgips zur Verwendung bei der Herstellung von Zement, durch prozessinterne Behandlung von Phosphorgips zusammen mit einem oder mehreren Standardbestandteilen, die bei der Herstellung von Zement verwendet werden, durch Vermischen oder Vermahlen mit Alkyl-, Alkenyl- und/oder Alkanolderivaten von Ammoniak, darunter C₂H₇NO, CₐH₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃, die in einem Anteil von 0,08 Gew.-% bis 5 Gew.-%, bezogen auf den Phosphorgips, entweder einzeln oder in Kombination miteinander zugegeben werden, so dass sich stabile Zwischenverbindungen von Phosphat- und/oder Fluoridsalzen mit den Ammoniakderivaten bilden, wobei die Standardbestandteile aus der Gruppe bestehend aus Zement, Klinker und zementhaltigen Mineralstoffen wie Flugasche, Schlacke, Kalkstein, Metakaolin, Silikastaub, calcinierte Tonerde und Vulkanasche gewählt sind.

8. Verfahren nach Anspruch 7, wobei Industrieabfälle, die Alkyl-, Alkenyl- und/oder Alkanolderivate von Ammoniak enthalten, verwendet werden.

9. Verfahren nach Anspruch 7 oder 8, wobei es sich bei der industriellen Anwendung, für die Phosphorgips zu verwenden ist, um die Herstellung von Multigrade-Zement, darunter gewöhnlicher Portland-Zement, Portland-Puzzolan-Zement und Portland-Schlacken-Zement, handelt.

10. Verfahren nach Anspruch 9, wobei der hergestellte Zement Druckfestigkeiten von 15 bis 75 MPa nach einer Hydratation von 1 bis 28 Tagen aufweist.

11. Verfahren nach Anspruch 10, wobei der hergestellte Zement eine anfängliche Abbindezeit von 70 bis 150 Minuten und eine endgültige Abbindezeit von 150 bis 250 Minuten aufweist.

## Revendications

1. Procédé d'inertisation des impuretés solubles libres de phosphates et/ou d'ions fluorures dans du phosphogypse pour une utilisation dans des applications industrielles, par préconditionnement de phosphogypse sur une période prolongée par pulvérisation avec des dérivés d'alkyle, d'alcényle et/ou d'alcanol d'ammoniac, ajoutés dans la proportion de 0,08 % à 5 % en poids de phosphogypse, soit individuellement soit en combinaison les uns avec les autres, pour former des sels intermédiaires stables de phosphate et/ou fluorure des dérivés d'ammoniac.

2. Procédé selon la revendication 1, dans lequel les dérivés d'alkyle, d'alcényle et/ou d'alcanol d'ammoniac sont parmi C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃.

3. Procédé selon la revendication 2, dans lequel des déchets industriels contenant des dérivés d'alkyle, d'alcényle et/ou d'alcanol d'ammoniac sont utilisés.

4. Procédé selon la revendication 2 ou 3, où l'application industrielle pour laquelle le phosphogypse doit être utilisé est la fabrication de ciment multigrade, y compris le ciment Portland ordinaire, le ciment de Portland pouzzolanique et le ciment de laitier Portland.

5. Procédé selon la revendication 4, dans lequel le ciment fabriqué présente des résistances à la compression de 15 à 75 MPa à des durées d'hydratation de 1 à 28 jours.

6. Procédé selon la revendication 5, dans lequel le ciment fabriqué présente un temps de prise initial de 70 à 150 minutes et un temps de prise final de 150 à 250 minutes.

7. Procédé d'inertisation des impuretés solubles libres de phosphates et/ou d'ions fluorures dans du phosphogypse pour une utilisation dans la fabrication de ciment, par traitement en cours de procédé du phosphogypse conjointement avec un ou plusieurs constituants standards utilisés dans la fabrication du ciment, par mélange intime ou broyage avec des dérivés d'alkyle, d'alcényle et/ou d'alcanol d'ammoniac parmi C₂H₇NO, C₄H₁₁NO₂, C₆H₁₅NO₃, C₂H₈N₂, C₄H₁₃N₃, C₆H₁₈N₄, C₈H₂₃N₅, C₆H₁₅NO, C₄H₁₁NO, C₅H₁₃NO₂, C₃H₉NO, C₉H₂₁NO₃, ajoutés dans la proportion de 0,08 % à 5 % en poids de phosphogypse, soit individuellement soit en combinaison les uns avec les autres, pour former des sels intermédiaires stables de phosphate et/ou fluorure des dérivés d'ammoniac, dans lequel les constituants standards sont dans le groupe constitué par le ciment, le clinker et les constituants minéraux du ciment tels que les cendres volantes, les scories, le calcaire, le métakaolin, les fumées de silice, l'argile calcinée et la cendre volcanique.

8. Procédé selon la revendication 7, dans lequel des déchets industriels contenant des dérivés d'alkyle, d'alcényle et/ou d'alcanol d'ammoniac sont utilisés.

9. Procédé selon la revendication 7 ou 8, où l'application industrielle pour laquelle le phosphogypse doit être utilisé est la fabrication de ciment multigrade parmi le ciment Portland ordinaire, le ciment de Portland pouzzolanique et le ciment de laitier Portland.

10. Procédé selon la revendication 9, dans lequel le ciment fabriqué présente des résistances à la compression de 15 à 75 MPa à des durées d'hydratation de 1 à 28 jours.

11. Procédé selon la revendication 10, dans lequel le ciment fabriqué présente un temps de prise initial de 70 à 150 minutes et un temps de prise final de 150 à 250 minutes.
